(19) Europäisches Patentamt
European Patent Office
Office européen des brevets

(11) Publication number: 0 272 862
A2

(12) **EUROPEAN PATENT APPLICATION**

(21) Application number: 87311006.8

(22) Date of filing: 15.12.87

(51) Int. Cl.4: C 01 B 33/26
B 01 J 29/06

(30) Priority: 22.12.86 US 945150

(43) Date of publication of application:
29.06.88 Bulletin 88/26

(84) Designated Contracting States:
AT BE DE FR GB IT NL SE

(71) Applicant: MOBIL OIL CORPORATION
150 East 42nd Street
New York New York 10017 (US)

(72) Inventor: Chang, Clarence Dayton
11 Murray Place
Princeton New Jersey 08540 (US)

Han, Scott
4 Valerie Lane
Lawrenceville New Jersey 08644 (US)

Shihabi, David Said
8 Moore Mill Mt. Rose Road
Pennington New Jersey 08534 (US)

(74) Representative: Colmer, Stephen Gary et al
Patent Department c/o Mobil Services Company Limited
Mobil Court 3 Clements Inn
London WC2A 2EB (GB)

(54) **Dealuminization of aluminosilicates.**

(57) A process for the de-aluminization of aluminosilicates such as aluminosilicate zeolites, clays, gels, and crystalline silica-alumina, comprises contacting the aluminosilicate with an inorganic halide or oxyhalide in a non-aqueous solvent which is capable of dissolving the aluminum halide or oxyhalide which is formed.

EP 0 272 862 A2

Bundesdruckerei Berlin

## Description

### DEALUMINIZATION OF ALUMINOSILICATES

This invention relates to the removal of aluminum from crystalline aluminosilicate compositions.

Considerable effort has been devoted to the improvement of natural and synthetic aluminum-containing oxides such as clays, gels, aluminosilicates and the like with regard to pore structure, crystalline form, catalytic and adsorptive activity and thermal, hydrothermal and acid stability. Substantial incentive for this endeavor results from the broad application that such compositions have found as adsorbents, catalysts and ion exchange media in numerous chemical and hydrocarbon conversion and process systems. It is often the case that the chemical, physical and catalytic properties of these materials deteriorate on exposure to process environments, particularly those involving elevated temperatures, acidic process media or contact with steam. For example, the crystallinity and catalytic activity of aluminosilicate hydrocracking catalysts are known to deteriorate on to repeated regeneration which often involves exposing the catalyst to an extreme temperature capable of burning off deposited coke and residual hydrocarbon. The regeneration of such cracking catalysts generally requires that the catalyst be able to withstand steam and/or thermal atmospheres at temperatures in a range of 1,300°-1700°F (700-930°C). These compositions must also be able to withstand the chemically degrading influence of acidic materials such as the sulfur and nitrogen oxides encountered during regeneration of some systems.

The crystalline aluminosilicate zeolites represent a class of porous refractory inorganic oxides in which there is currently considerable interest in these and other respects. One factor that is known to influence the tolerance of crystalline aluminosilicate zeolites to acidic and thermal environments is the structural silica to alumina mole ratio. For any given class of aluminosilicates, thermal stability and resistance to acid and steam attack are known to improve as the structural $SiO_2/Al_2O_3$ mole ratio is increased. The value of procedures that are effective in increasing this ratio is therefore readily apparent.

In synthetic crystalline aluminosilicate zeolites, the silica to alumina mole ratio is essentially determined by the nature of the starting materials and the relative quantities of such materials used in the preparation of the zeolite. Some variation in the silica to alumina mole ratio can be obtained by changing the proportion of reactants, e.g., increasing the relative concentration of the silica precursor relative to the alumina precursor. However, definite limits in the maximum obtainable silica to alumina mole ratio are often observed. For example, synthetic faujasites having a silica to alumina mole ratio of 5.2 to 5.6 can be obtained by increasing the relative proportion of the silica precursor. However, when the silica proportion is increased to even higher levels no commensurate increase in the silica to alumina mole ratio of the crystallized synthetic faujasite is observed. Thus, the silica to alumina mole ratio of about 5.6 must be considered an upper limit in a preparative process using conventional reagents. Corresponding upper limits in the silica to alumina mole ratio of synthetic mordenite and erionite are also observed.

Accordingly, attempts to increase the silica to alumina mole ratio of crystalline zeolites by removal of aluminum from the crystal structure with strong acids have heretofore been reported. Further, it is known to increase the silica to alumina mole ratio of zeolites by converting the parent zeolite at least partially to its hydrogen form, hydrolyzing the aluminum to aluminum hydroxide, and thereafter physically removing the displaced aluminum.

U.S. Pat. Nos. 3,493,519; 3,506,400 and 3,513,108 teach methods for dealumination of zeolitic materials by steaming.

U.S. Pat. No. 3,442,795 describes a process for preparing highly siliceous zeolite-type materials from crystalline aluminosilicates by means of a solvolysis technique, e.g, hydrolysis, followed by a chelation technique.

U.S. Pat. No. 4,576,805 teaches a method for increasing lattice metal in a porous inorganic crystalline composition, by contact with the anhydrous vapors of a volatile compound, e.g., $AlBr_3$, $BCl_3$, $FeCl_3$, $CrO_2$,$Cl_2$, $PCl_3$, $TiCl_4$, $SnCl_4$ or $GaCl_3$. Such contacting generally occurs at an elevated temperature, i.e., greater than 100°C.

U.S. Pat. No. 4,273,753 teaches a method for dealuminizing aluminosilicates by contacting with vapors of an inorganic halide or oxyhalide, e.g., $PCl_3$, $CrO_2$, $Cl_2$, $TiCl_4$ or $SnCl_4$, at temperatures high enough to vaporize the aluminum halides formed.

U.S. Pat. No. 3,594,331 discloses a way of increasing thermal stability of crystalline zeolites by treatment with a dilute solution, typically an aqueous solution, of a fluorine compound, e.g, $(NH_4)_2SiF_6$, at temperatures of 60 to 130°F (16 to 54°C).

U.S. Pat. No. 4,503,023 teaches a method of extracting framework aluminum from as-synthesized zeolites and replacing such alumina with silicon by contacting the zeolite with a silicon-containing salt, e.g., $(NH_4)_2SiF_6$, in an aqueous solution.

A method of abstracting structural aluminum from aluminosilicates, thereby increasing the structural silica to alumina mole ratio while maintaining the ordered internal crystalline structure of the aluminosilicate, is disclosed in U.S. Pat. No. 3,691,099, in which the aluminosilicate is contacted with a mildly acidic solution containing at least one water soluble salt of a cation exchangeable with said aluminosilicate.

In U.S. Pat. No, 3,937,791, a method is described for removing alumina from a crystalline aluminosilicate in which the aluminosilicate is heated to between 50°C and 100°C in the presence of an aqueous solution of a

chromium salt of a mineral acid at a pH less than 3.5 and such that the atomic ratio of chromium to aluminum is greater than 0.5.

A method for increasing the silica to alumina mole ratio of a crystalline aluminosilicate zeolite by contacting said zeolite with water at elevated temperature and then treating to remove alumina from the crystal lattice is disclosed in U.S. Pat. No. 3,591,488. Following the high temperature water treatment, amorphous alumina is removed from the zeolite material by contacting with a dilute mineral acid or an organic acid chelating agent.

In U.S. Pat. No. 3,640,681, framework aluminum is extracted from crystalline zeolites using acetylacetone as the extracting agent. Prior to contact with the acetylacetone, the zeolite must be rendered substantially cation-deficient and at least partially dehydroxylated. Other metals can be substituted for the extracted framework aluminum by contacting the zeolite with a metal acetylacetone.

The treatment of zeolites with gaseous chlorine compounds such as $Cl_2$ or HCl to remove $AlCl_3$ is described in German OS No. 2,510,740.

The instant invention concerns a process for the dealuminization of crystalline aluminosilicates such as zeolites, clays, and crystalline silica-aluminas, the process comprising contacting the crystalline aluminosilicate with a non-aqueous liquid solution containing an inorganic halide or oxyhalide comprising a halogen and a non-halogen component to form an aluminum halide or aluminum oxyhalide and to deposit said non-halogen component in the crystalline aluminosilicate structure, wherein said non-aqueous liquid solution contains a liquid solvent capable of dissolving said aluminum halide or aluminum oxyhalide.

Aluminosilicate suited to treatment by the present invention comprise both natural and synthetic materials and include zeolites, clays, and crystalline silica-aluminas.

Aluminosilicate zeolites can be described as crystalline aluminosilicates consisting of a rigid three-dimensional framework of $SiO_4$ and $AlO_4$ in which the tetrahedra are crosslinked by the sharing of oxygen atoms whereby the ratio of the total aluminum and silicon atoms to oxygen is 1:2. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially by another type of cation utilizing ion exchange techniques in a conventional manner. By means of such cation exchange, it is possible to vary the properties of a given aluminosilicate zeolite.

Prior art techniques have resulted in the formation of a great variety of synthetic zeolites. These zeolites have come to be designated by letter or other convenient symbols, as illustrated by zeolite A (U.S. Pat. No. 2,882,243), zeolite X (U.S. Pat. No. 2,882,244) zeolite Y (U.S. Pat. No. 3,130,007), zeolite beta (U.S. Pat. No. 3,308,069), zeolite ZK-5 (U.S. Pat. No. 3,247,195); zeolite ZK-4 (U.S. Pat. No. 3,314,752) zeolite ZSM-5 (U.S. Pat. No. 3,702,886), zeolite ZSM-11 (U.S. Pat. No. 3,709,979), zeolite ZSM-12 (U.S. Pat. No. 3,832,449), zeolite ZSM-20 (US. Pat. No. 3,972,983), zeolite ZSM-23 (U.S. Pat. No. 4,076,842), ZSM-35 (U.S. Pat. No. 4,016,245), and ZSM-48 (U.S. Pat. No. 4,375,573).

The useful halogen component of the inorganic halides and oxyhalides utilized in the present invention and selected from the group consisting of fluorine, chlorine, bromine and iodine, preferably chlorine.

Non-limiting examples of inorganic halides and oxyhalides useful in the instant invention include $SiCl_4$ $FeCl_3$, $GaCl_3$, $ZnCl_2$, $VOCl_3$, $VF_5$, $PCl_3$, $TiCl_4$, and $CrO_2Cl_2$. Preferably, the inorganic halide contains an element selected from the group consisting of Si, Ge, Sn, and Pb, preferably Si. Preferably, the inorganic halide employed is $SiCl_4$. Alternatively, the inorganic halide can contain an element selected from the group consisting of Ti, Zr, and Hf.

The crystalline aluminosilicate treated by the present invention can be selected from the group consisting of zeolite X, zeolite Y, zeolite beta, ZSM-5, ZSM-11, ZSM-12, ZSM-23, ZSM-35, ZSM-38 and ZSM-48. The crystalline aluminosilicate can be acid-exchanged or ammonium-exchanged prior to treatment by the present invention. In a particularly preferred embodiment, the intracrystalline pores of the crystalline aluminosilicate are obstructed prior to treatment such that only surface framework aluminum is exposed to said inorganic halide during treatment by the present invention.

The following reaction between aluminosilicate and $SiCl_4$ typifies the novel process of the instant invention:

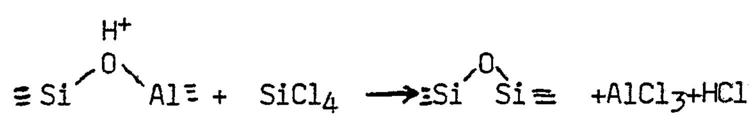

The removal of Al, especially from aluminosilicate zeolites, tends to give greater stability. Without wishing to be bound by an particular theory or operability, it is believed that the non-halogen component of the halide or oxyhalide is deposited at the site previously occupied by the aluminum. Thus it is felt that this method leads to even greater stabilization since the vacancy left by the Al is "filled" with another atom or molecule. Furthermore, this method can be used to introduce different atoms into the aluminosilicate structure, thus modifying catalytic function.

The solvent in which the inorganic halide or inorganic oxyhalide is dissolved is a non-aqueous liquid solvent capable of dissolving $AlX_3$ produced during dealumination. Examples of such solvents are halogenated hydrocarbons, e.g., $CX_4$, $CHX_3$, $CH_2X_2$, $CH_3X$, particularly the chlorinated species $CCl_4$, $CHCl_3$ and $CH_2Cl_2$.

Other useful non-aqueous solvents include carbon disulfide, dimethylsulfoxide (DMSO) and ethers, e.g., dimethylether, diethylether and methylether.

The present invention can be carried out at moderate temperatures and pressures. Temperatures during contact of the aluminosilicate with the inorganic halide can be less than about 100° C, preferably below about 70° C. Pressures may be autogenous or may range from 90 to 400 kPa, preferably 95 to 110 kPa. Preferably these reaction parameters can be maintained by refluxing the reaction mixture, particularly where the liquid solvent has a boiling point below about 100° C. Contact times employed are not normally critical but typically range from 0.5 to 48 hours, preferably 1 to 24 hours. The reaction mixture is preferably stirred during treatment in order to effect greater mixing of the reactants and reduce contact time. After sufficient reaction has occurred, the product can be filtered in order to separate the dealuminized product from the liquid non-aqueous solvent. The product can thereafter be washed with any suitable liquid, e.g., water. After washing, the product can be converted to the ammonium or acid form, e.g., by ion exchange.

The improved characteristics of aluminosilicates treated in accordance with this invention, particularly those relating to increased $SiO_2/Al_2O_3$ mole ratios and hydrothermal stability, renders them particularly attractive for application in a number of processes. Exemplary of such processes are the use of the resultant aluminosilicates as ion exchange media or as catalyst or catalyst supports in the conversion of organic compounds, particularly hydrocarbons. Exemplary of hydrocarbon conversion systems in which these compositions are particularly suitable are hydrocracking, cracking, hydrofining, e.g., desulfurization and denitrogenation, isomerization, polymerization, alkylation, reforming, hydrogenation, dehydrogenation and the like. A typical catalytic application of such compositions is in the conversion of hydrocarbons by hydrofining and hydrocracking in which case the described aluminosilicates should contain a catalytically active amount of hydrogenation component such as the Group VI or Group VIII metals, oxides and sulfides. By using members of Groups IB, IIB, IV, V, VI and VIII with said aluminosilicates, other reactions can be carried out such as CO hydrogenation and oxidation; hydrocarbon oxidation, halogenation and nitration; and olefin hydration.

It is also preferable when employing these aluminosilicates as catalysts or catalyst supports to render them in the form of relatively stable aggregates, e.g. pellets, tables, extrudates and the like. The use of an added binder composition is usually preferred to improve the structural properties of the resultant aggregate. The binder compositions most commonly employed for aluminosilicates of this nature comprise predominantly alumina, certain forms of alumina being particularly preferred.

The invention will now be described with reference to the following examples and the accompanying drawings in which Figure 1 shows the X-ray diffraction pattern of an untreated zeolite Y sample and Figure 2 shows the pattern of the same sample after treatment by the method of Example 2.

Example 1

The following treatment was applied to zeolite ZSM-5 in the $NH_4^+$ form. Four grams of the anhydrous zeolite was slurried with 150 ml of chloroform (after drying over $P_2O_5$) in a 250 ml round bottom flask. To this 5 ml of $SiCl_4$ were added by syringe and the flask was stoppered using a Teflon liner. The reaction was allowed to proceed overnight with stirring at room temperature. The product was then filtered to remove all the chloroform and washed with copious water. The resultant zeolite was ammonium exchanged with $NH_4NO_3$ solution. TGA/TPD and x-ray diffraction analyses were obtained for the parent and product.

Exchange capacity measurements for the zeolites showed a drop in exchange capacity from the parent, 0.44 meq/g ($SiO_2/Al_2O_3$ = 75), versus the product, 0.38 meq/g ($SiO_2/Al_2O_3$ = 87). This indicated a loss of acid sites due to aluminum removal. X-ray diffraction showed the product to be 99% crystalline versus the parent indicating retention of framework integrity. Analysis of the treated zeolite indicated 94.46 wt.% $SiO_2$ and 1.87 wt.%. $Al_2O_3$ confirming the $SiO_2/Al_2O_3$ ratio determined by ion exchange measurement.

Example 2

The following is an example of non-aqueous dealumination of Y zeolite. Five grams of anhydrous $NH_4^+$ /$Na^+$ Y zeolite (65% exchanged) containing a total Al content of 0.0177 moles and having a $SiO_2/Al_2O_3$ molar ratio of about 5 were slurried with 150 ml of anhydrous chloroform in a 250 ml beaker. To this slurry was added enough $SiCl_4$ to give 0.00885 moles of Si (1.01 ml, 1.50 g). The mixture was stirred and refluxed overnight (61° C). The product was filtered to remove all chloroform and then washed copiously with water.

X-ray diffraction analyses indicated peak shifts in the product versus the parent. The Figure shows the X-ray diffraction patterns of the untreated and treated Y zeolites. The peak shifts toward higher angles in the product indicate lattice contractions associated with aluminun removal and possible silicon substitution. The $SiO_2/Al_2O_3$ molar ratio of the treated zeolite was 9.

**Claims**

1. A process for removing framework aluminum from a crystalline aluminosilicate which comprises contacting the crystalline aluminosilicate with a non-aqueous liquid solution containing an inorganic halide or oxyhalide comprising a halogen and a non-halogen component to form an aluminum halide or aluminum oxyhalide and to deposit said non-halogen component in the crystalline aluminosilicate

structure, wherein said non-aqueous liquid solution contains a liquid solvent capable of dissolving said aluminum halide or aluminum oxyhalide.

2. The process of claim 1 wherein said contacting occurs at a temperature less than about 100° C.

3. The process of claim 1 or claim 2 wherein said halogen is chlorine.

4. The process of any preceding claim wherein said inorganic halide contains an element selected from Si, Ge, Sn, and Pb.

5. The process of any one of claims 1 to 3 wherein said inorganic halide contains an element selected from Ti, Zr, and Hf.

6. The process of claim 4 wherein said inorganic halide contains Si.

7. The process of claim 6 wherein said inorganic halide is $SiCl_4$.

8. The process of any preceding claim wherein said liquid solvent is selected from $CCl_4$, $CHCl_3$, $CH_2Cl_2$ and $CH_3Cl$.

9. The process of claim 8 wherein said liquid solvent is $CHCl_3$.

10. The process of claim 1 wherein said crystalline aluminosilicate is selected from zeolite X, zeolite Y, zeolite beta, ZSM-5, ZSM-11, ZSM-12, ZSM-23, ZSM-35, and ZSM-48.

FIG. 1

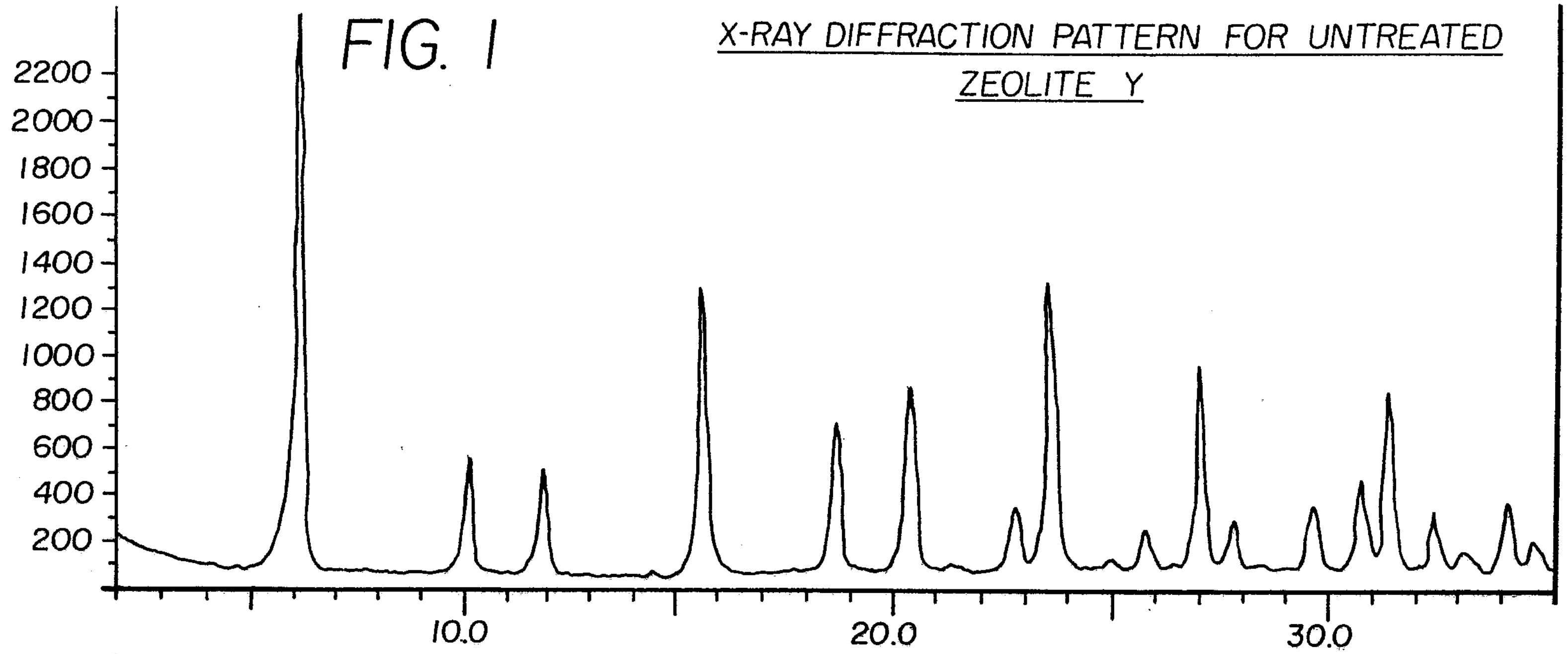
X-RAY DIFFRACTION PATTERN FOR UNTREATED ZEOLITE Y
2200
2000
1800
1600
1400
1200
1000
800
600
400
200
10.0
20.0
30.0

FIG. 2

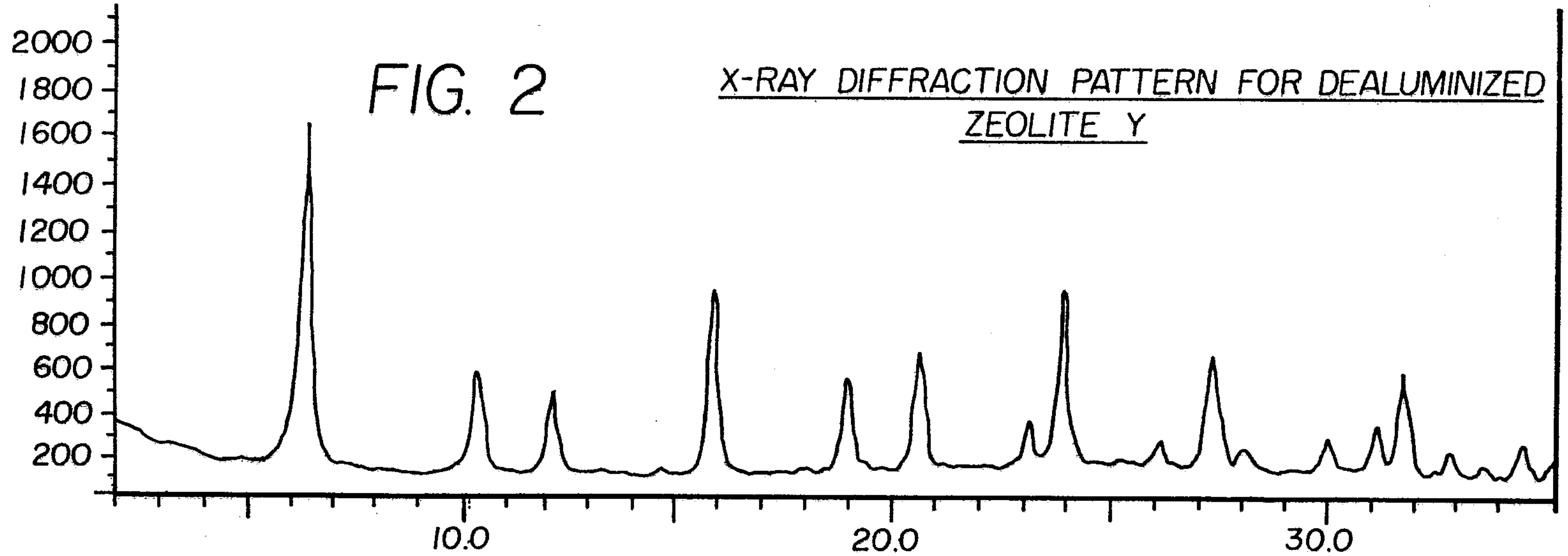
X-RAY DIFFRACTION PATTERN FOR DEALUMINIZED ZEOLITE Y
2000
1800
1600
1400
1200
1000
800
600
400
200
10.0
20.0
30.0